# EUROPEAN PATENT APPLICATION

(11) **EP 3 777 505 A1**
(43) Date of publication of application: **17.02.2021**
(21) Application number: 19727438.4
(22) Date of filing: 10.04.2019
(51) Int. Cl.: A01C 7/20, A01C 5/06, A01C 7/04

(54) **SEEDER**

(30) Priority: 12.04.2018 ES 201830361
(71) Applicant: Fernández Mora, Manuel, 02005 Albacete (ES)
(72) Inventor: Fernández Mora, Manuel, 02005 Albacete (ES)
(74) Representative: Sugrañes Patentes y Marcas
(86) International application number: PCT/ES2019/070249
(87) International publication number: WO 2019/197699

(57) **Abstract**

A seeder machine (1) comprising at least one seeding module towed by a tractor vehicle, each module comprising
- an air intake (5);
- a hopper (7) for storing seeds (2);
- a rotating plate (8) provided with a plurality of holes (9) able to retain and transport a seed (2) by suction in a unitary manner; and
- a dosing scoop wheel (11) synchronised with the rotating plate (8), provided with a plurality of buckets (12).

It is characterised in that the dosing scoop wheel (11) comprises automatic opening and closing means (16) for each bucket (12), configured to cause the closing of each bucket (12) after receiving a seed (2) coming from the rotating plate (8), and to cause the opening thereof when the respective bucket (12) adopts an inverted position, wherein the seed (2) is able to fall from a point adjacent to the level of the terrain.

## Description

### Technical field of the invention

The present invention relates to a seeder machine, especially apt for garlic, onion or similar seeds, which have an oblong configuration.

In the present document, a seed with an oblong configuration is understood as one which possesses a longitudinal dimension larger than the width thereof from the opposite ends from which the germ and the root emerge, respectively.

### Background of the invention

Seeder machines for garlic with pneumatic actuation are known which comprise one or several seeding modules mounted in a parallel manner on a chassis towed by a tractor vehicle. The number of modules to be used depends on the seeding lines which are to be seeded at the same time. The machine further has a turbine actuated by the power take-off of the tractor vehicle.

Each seeding module comprises an air intake connected to said turbine; a hopper for storing garlic seeds provided in the lower portion thereof with a dispensing outlet arranged in front of the air intake; a rotating plate synchronised with the advance speed of the tractor vehicle, provided with a plurality of intake holes with a size smaller than that of the seeds and that are distributed regularly on the perimeter thereof, the rotating plate having an intake area arranged between the intake and the seed dispenser outlet such that each of the holes, as they sequentially pass in front of the intake area, is able to retain a seed by suction and transport it in a unitary manner to an area outside the area of reach of the intake area.

Generally, it has a collection of plates, each one with different hole sizes depending on the size of the garlic seeds to be seeded, since the seeds have been previously classified by size, in order to thus guarantee that the seeds stay adhered to the holes in an efficient manner.

Some types of known seeder machines comprise, for each seeding module, a wheel or dosing scoop wheel provided on the periphery thereof with a plurality of fixed buckets made up as compartments. Said dosing scoop wheel is synchronised in movement with the rotating plate such that the end of the intake of each hole coincides with the passing of each of the buckets, each bucket able to receive on the inside thereof one seed and transport it in a unitary manner to a release area, wherein the seed is able to fall due to gravity onto a seed furrow which has been traced in the terrain in the longitudinal advance direction.

In order to perform the opening of the furrow, the known seeder machines have a device as a seed coulter, coupled to the chassis of the machine in front of the dosing scoop wheel. Additionally, in the rear portion of the machine they can carry a device for trapping and covering the furrow wherein the seeds have been deposited.

It is worth noting that the respective buckets are positioned in an inverted manner when they reach the lower portion of the dosing scoop wheel, corresponding to the position closest to the terrain. Nevertheless, in practice it has been confirmed that the seeds fall due to gravity before each bucket reaches the inverted position thereof, for which reason they normally fall from an elevated height with respect to the level of the terrain, with the consequent risk of them bouncing on the furrow and losing the desired seeding position.

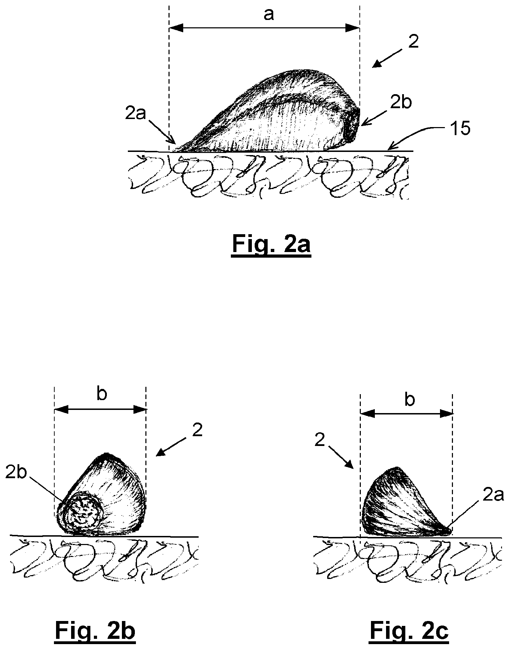

Likewise, it is important to note that the garlic seeds have a geometric shape such that when they are deposited on a horizontal surface, they adopt a lying position. Furthermore, they have an oblong configuration, meaning with a longitudinal dimension larger than the transverse width thereof, from the opposite ends of which the germ and the root emerge, respectively (see figures 2a to 2c).

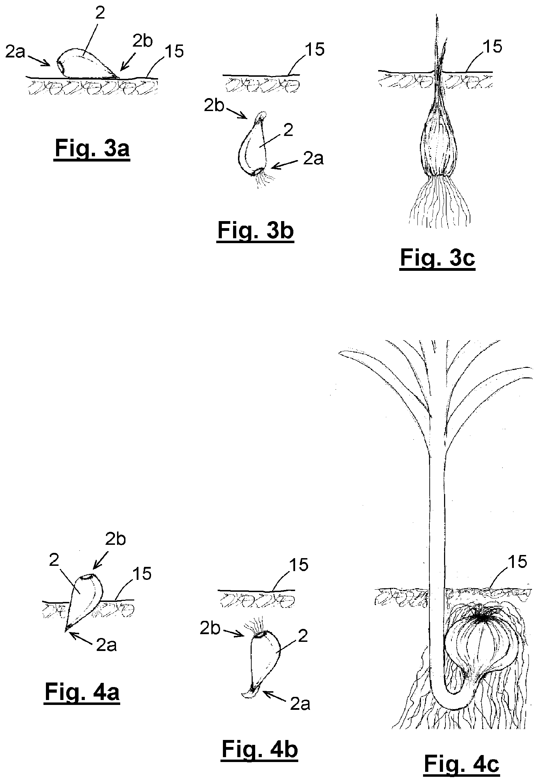

Said lying position is the optimal position for the correct emergence thereof, since the seed once buried, as it germinates, starts to move until it adopts a substantially vertical position, wherein the germ stays arranged upwards, enabling the stem to grow in order to project from the level of the terrain, while the root is directed downwards in order to look for nutrients from the soil (see figures 3a to 3c).

Nevertheless, with the existing seeder machines it has been confirmed that a certain percentage of the seeds, when they fall in an arbitrary manner, stay embedded in the terrain in a substantially vertical position with the germ of the seed arranged downwards, which causes the stem during the growth thereof to have to go all the way around in order to exit to the surface, causing a curve or bend in the stem which stays in the future plant in an anomalous manner (see figures 4a to 4c). This implies a delay in the emergence process as well as a problem for the subsequent operations of conditioning the garlic bulb for the commercialisation thereof, bringing with it a loss in production.

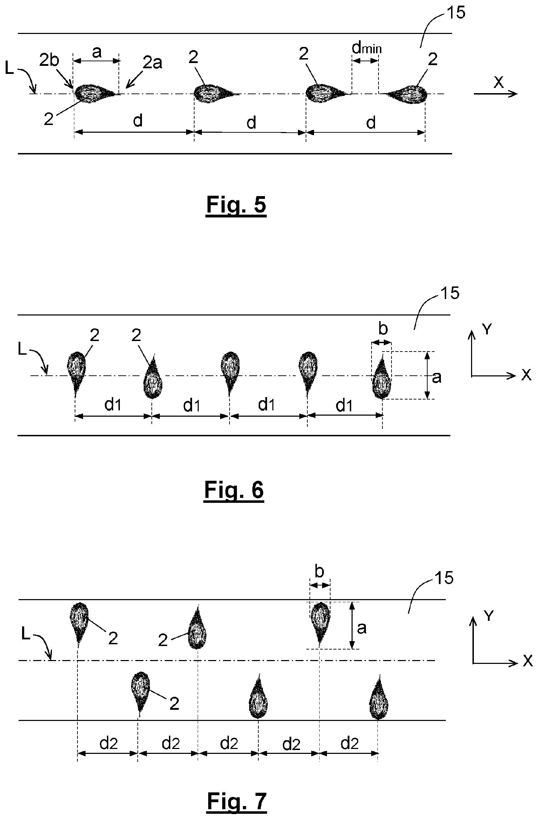

Another aspect to be noted is that the seeds are deposited onto the furrow forming a row, such that they are separated at a certain distance from each other, usually staying positioned with the larger longitudinal dimension thereof arranged substantially parallel to a central line of the furrow, according to the longitudinal forward direction thereof (see figure 5).

Nevertheless, it has been confirmed that this arrangement has the problem of two contiguous seeds being able to stay arranged with the respective germs thereof facing each other, which makes it necessary to foresee a minimum distance between germs in order to guarantee an appropriate space for the correct growth of the future plants (see figure 5). This limitation obligates foreseeing a separation distance between seeds large enough to prevent this problem of a lack of space, which in turn results in lower production per linear metre.

Consequently, the known seeder machines have several drawbacks since they do not allow for a suitable control of parameters such as the falling height of the seeds, the distance between seeds or the correct positioning thereof on the furrow.

Thus, it would be desirable to have a solution especially apt for seeder machines for garlic, onions or the like, which enables a suitable control of the fall of the seeds onto the furrow, and which in turn enables each seed to be deposited in an optimal position for the seeding and emergence thereof.

### Description of the invention

With the object of providing a solution to the problems posed, a seeder machine is disclosed, which is especially apt for garlic, onion or similar seeds, which have an oblong configuration, said seeder machine comprising at least one seeding module mounted on a chassis towed by a tractor vehicle, and a turbine actuated by the power take-off of the tractor vehicle, each seeding module comprising
- an air intake connected to said turbine;
- a hopper for storing seeds equipped with a dispenser outlet arranged in front of the air intake;
- a rotating plate synchronised with the dragging speed of the tractor vehicle, provided with a plurality of holes distributed regularly on the perimeter thereof, said rotating plate being partially arranged between said air intake and the dispenser outlet of the hopper, defining on the rotating plate an intake area, such that each of the holes, as they sequentially pass in front of the intake area, is able to retain a seed by suction and transport it in a unitary manner to an area outside the area of reach of said intake area; and
- a dosing scoop wheel provided on the perimeter thereof with a plurality of fixed buckets made up as compartments, the dosing scoop wheel being synchronised in movement with the rotating plate such that the end of the intake of each hole coincides with the passing of each of the buckets, each bucket being able to receive on the inside thereof one seed and transport it in a unitary manner to a release area, wherein the seed is able to fall due to gravity onto a seed furrow which has been traced in the terrain in the longitudinal advance direction X.

The seeder machine of the invention is characterised in that the dosing scoop wheel comprises automatic opening and closing means for each bucket, configured to cause the closing of each bucket after receiving a seed coming from the rotating plate, and to cause the opening thereof when the respective bucket adopts an inverted position, wherein the seed is able to fall from a point adjacent to the level of the terrain.

As mentioned, a seed with an oblong configuration is understood here as one which possesses a longitudinal dimension larger than the width thereof from the opposite ends from which the germ and the root emerge, respectively.

By the effects of the opening and closing means of the buckets, a better control of the fall of the seeds onto the furrow is achieved, since the opening of the bucket is produced when it is as close as possible to the terrain, in the inverted position thereof, thus enabling the respective seed to be deposited in a controlled manner onto the furrow without it bouncing or moving from the desired position, thus guaranteeing a uniformity of the predetermined distance between seeds.

Advantageously, the opening and closing means are configured to accommodate the seed inside the respective bucket in an operating seeding position, meaning arranging the seed lying in a horizontal position and with the larger longitudinal dimension of the seed oriented in a transverse direction Y perpendicular to a central line of the furrow defined in the longitudinal advance direction X, such that in the opening position of the bucket, the seed is able to fall and be deposited onto the furrow, maintaining said operating position.

Thus, the configuration of the opening and closing means enables the seeds to be deposited in said operating position which is optimal for the seeding and emergence of the seeds. Thus, the fact that the seeds are always deposited in a lying position guarantees during the emergence thereof a correct orientation of the seed with the germ arranged upwards, thus preventing possible anomalous formations of the stem of the future plants, producing a more homogeneous growth and thus improving the commercialisation thereof. Likewise, by the effects of the fact that the seeds stay positioned with the larger longitudinal dimension oriented perpendicularly to the central line of the furrow, it prevents two contiguous seeds from staying arranged with the respective germs thereof facing each other, which enables the necessary distance between seeds per linear metre to be reduced, thus achieving higher productivity and homogeneity in the size of the bulbs of garlic, onion, etc.

According to a preferred embodiment of the invention, the opening and closing means of the buckets comprise a set of collapsible flaps, each one linked to a bucket, each flap being articulated on the inside of the respective bucket thereof by means of a toggle shaft oriented in the transverse direction Y, such that each flap is able to tilt between a front wall and a rear wall of the respective bucket, in order to perform the closing and opening thereof, respectively, and each flap further comprising a support flange arranged on the opposite end of the rotation shaft thereof, said support flange being configured to accommodate the seed in the cited operating position when the bucket is arranged in the inverted position with the flap closed.

Preferably, the support flange has a substantially rectangular configuration, the width of which is substantially smaller than the larger longitudinal dimension of the seed, such that the seed is obligated to adopt a transverse position inside the bucket, meaning being arranged with the larger longitudinal dimension thereof oriented in the transverse direction Y, perpendicularly to the central line of the furrow, and in turn lying in a horizontal position due to the intrinsic configuration thereof.

According to another feature of the invention, the flaps are linked to actuation means for the opening and closing thereof synchronised with the rotating movement of the dosing scoop wheel.

According to a preferred embodiment, the actuation means of the flaps comprise a set of toggle levers coupled onto one lateral face of the dosing scoop wheel, each lever being linked to a flap, such that the articulation shaft of each lever is secured in rotation with the toggle shaft of the respective flap thereof, each lever being further coupled on one end to the elastic means which tend to maintain the flap in the opening position thereof, while the opposite end of the lever is able to come into contact with an actuator element fixed in a secure manner to the chassis of the machine, said actuator element being configured to push each of the levers as they sequentially pass during the rotation of the dosing scoop wheel, exerting a pushing force on each lever that is able to overcome the force applied by the respective elastic means, thus causing the progressive closing of the respective flaps during a predetermined time comprised from the moment when the respective bucket has received the seed until it reaches the inverted position thereof, moment when the actuator element stops exerting pressure on the respective lever, therefore this lever being stretched by the restoring force of the elastic means, thereby causing the immediate opening of the flap of the bucket arranged in the inverted position in order to unload the seed by gravity into the seed furrow.

Preferably, the actuator element is configured by a cam equipped with a substantially semicircular guiding surface, arranged concentrically to the rotation shaft of the dosing scoop wheel, such that said cam is fastened to the chassis in an adjustable position, the start of stroke of which corresponds to the successive passing of each lever when the associated bucket has received the seed, causing the progressive closing of the respective flap, and the end of stroke of which corresponds to the successive passing of each lever when the associated bucket adopts the inverted position thereof, the cam at that time stop acting in order to cause the immediate opening of the respective flap.

According to another feature of the invention, each bucket comprises diverting means configured to position the seed inside the bucket at a predetermined distance with respect to the vertical plane of symmetry of the bucket, said vertical plane of symmetry being substantially aligned with the central line of the seed furrow, said diverting means being adjustable in order to establish said distance at will for each of the buckets.

Thus, different seeding patterns can be created, each seed being able to be arranged on one side or the other of the central line of the furrow, on alternating sides or in one same row, all of this maintaining the cited operating position of the seed.

Preferably, the diverting means are configured to create an offset seeding pattern, meaning depositing the seeds onto the furrow in two parallel rows, each one on one side of the central line of the furrow, such that each seed of one row stays in front of a gap, between two seeds, of the other row, the diverting means being positioned to this end in the successive buckets in an alternating manner on one side and the other of the vertical plane of symmetry thereof.

This offset arrangement enables the seeds to be deposited onto the furrow in an alternating manner on one side and the other of the central line of the furrow, which enables the separation distance between seeds to be diminished, in comparison with the necessary distance in the row arrangement, thus enabling the production per linear metre to be increased even more.

According to a preferred embodiment, the diverting means of each bucket are made up of at least one support coupled on the inside of the bucket, said support comprising a first partition tilted frontally in the longitudinal advance direction X, intended to act as a stop of the respective toggle flap in the closing position thereof, and a second partition tilted laterally in the transverse direction Y towards one of the lateral walls of the bucket, such that the intersection of said second lateral partition and the flap in the closing position thereof define a square space on the support flange of the flap, said square space staying arranged at a predetermined distance with respect to the vertical plane of symmetry of the bucket, and such that said square space has a dimension in the transverse direction Y substantially coinciding with the larger longitudinal dimension of the seed, and a dimension in the longitudinal direction X substantially coinciding with the width of the support flange of the flap, thereby enabling the seed to be accommodated in the operating position thereof.

According to another feature of the invention, each module is equipped with means for preparing the ground comprising a device for forming a furrow, coupled to the chassis in a front area of the dosing scoop wheel, and configured such that it is able to remove the earth, push away possible stones, and in turn form a furrow.

According to a preferred embodiment, said device for forming the furrow comprises two substantially vertical blades which converge in a front edge with a predetermined angle of attack and a cutter integrated in the lower portion of said edge.

Advantageously, the means for preparing the ground further comprise a flattening wheel coupled to the chassis in an area right behind the device for forming the furrow, said flattening wheel being intended to form a flat and homogeneous bed on the furrow whereon the seeds will be deposited.

According to a first variation, the flattening wheel has a smooth rolling surface able to form a smooth bed.

According to a second variation, the flattening wheel has a grooved rolling surface able to form a grooved bed with a series of transverse slots separated from each other at a predetermined distance, said flattening wheel being synchronised with the dosing scoop wheel in order to cause the fall of each seed in a unitary manner into each slot.

According to another feature of the invention, each module is equipped with means for compacting the seeds on the ground, which comprise a compacting wheel coupled to the chassis in an area behind the dosing scoop wheel, configured such that it is able to press the seeds deposited on the bed of the furrow and fasten them at a predetermined depth.

According to a first variation, the compacting wheel comprises a simple rolling surface configured to directly compact the seeds as they pass.

According to a second variation, the compacting wheel is linked to a crawler tractor mechanism comprising a toggle pinion articulated around the rotation shaft of the compacting wheel through a rod-type support, said pinion being arranged in front of the compacting wheel at a predetermined distance, and the compacting wheel and the pinion further being respectively coupled inside a crawler-type wrapping band equipped with a rolling surface for the advance thereof over the seeds, such that the forward arrangement of the pinion enables the wrap-around band to be tensed creating a gripping surface on the terrain able to immobilise the seeds before being compacted by the compacting wheel.

According to another feature of the invention, each module is equipped with means for hilling ground comprising a hilling device coupled to the chassis in an area behind the compacting wheel, intended to cover the seeds fastened in the bed of the furrow with ground.

According to a preferred embodiment, said hilling device comprises two hilling discs arranged on each side of the bed of the furrow, partially buried and tilted between each other with a predetermined angle of divergence, the arrangement of which enables the adjacent ground to be removed and deposited onto the bed of the furrow in order to cover the seeds.

Advantageously, the means for hilling ground further comprise a levelling scraper coupled to the chassis in an area right behind the hilling device, intended to form a flat and homogeneous plateau which determines the definitive furrow wherein the seeds will be buried.

### Brief description of the drawings

The accompanying drawings illustrate by way of non-limiting example, a preferred embodiment of the seeder machine object of the invention. In said drawings:
Fig. 1 is a schematic elevation view of the seeder machine of the present invention;
Figs. 2a to 2c are different elevation views of a garlic seed arranged lying on the terrain, showing the oblong configuration thereof according to the respective longitudinal and transverse dimensions thereof;
Figs. 3a to 3c schematically show a growth sequence of a garlic seed which has fallen lying on the terrain, resulting in an optimal emergence;
Figs. 4a to 4c schematically show a growth sequence of a garlic seed which has fallen vertically on the terrain with the germ downwards, resulting in a bad emergence;
Fig. 5 is a schematic plan view of the seed furrow showing an arrangement of the seeds in a row, wherein the seeds are positioned with the larger longitudinal dimension substantially parallel to the central line of the furrow, in the longitudinal advance direction X, as known in the state of the art;
Fig. 6 is a schematic plan view of the seed furrow showing an arrangement of the seeds in a row, wherein the seeds are positioned with the larger longitudinal dimension oriented in a transverse direction Y perpendicular to the central line of the furrow, according to an embodiment of the invention;
Fig. 7 is a schematic plan view of the seed furrow showing another variation of the arrangement of Fig. 6, according to an offset seeding pattern;
Fig. 8 is an elevation view of the rotating disc with holes mounted on a support to the chassis, the support being equipped with an opening adjacent to the intake;
Fig. 9 is an elevation view of the support wherein it is coupled to the rotating disc, showing an opening which encompasses the intake area;
Fig. 10 is an elevation view showing the transmission means between the rotating disc and the dosing scoop wheel;
Fig. 11 is a schematic view of the dosing scoop wheel during the operations thereof by means of the collapsible flaps, showing the receiving and transportation of the seeds in the respective buckets and the release thereof over the seed furrow;
Fig. 12 is an enlarged view of the lower portion of the dosing scoop wheel of Fig. 11;
Fig. 13 is a schematic lateral elevation view of a bucket showing the collapsible flap in the closed and open positions thereof, respectively;
Fig. 14 is an elevation view of the rotating disc and the dosing scoop wheel, from the opposite side as the one shown in Fig. 10, showing the actuation means of the collapsible flaps;
Fig. 15 is a schematic lateral elevation view of a bucket showing the diverting means;
Fig. 16 is a schematic front elevation view of the bucket seen from a cross section plane C-C shown in Fig. 15, showing the vertical plane of symmetry of the bucket;
Fig. 17 is a schematic view of the bucket seen from the front according to a direction represented by arrow A of Fig. 15, showing the seed in the operating position thereof, and showing in dotted lines a fictitious position of the seed that is impossible to adopt;
Fig. 18 is a schematic view of the bucket of Fig. 17 shown from the lower portion thereof according to a direction represented by arrow B of Fig. 15;
Figs 19a and 19b are corresponding schematic front elevation views of two adjacent buckets, showing the respective diverting means arranged on alternating sides with respect to the vertical plane of symmetry of the bucket for forming an offset seeding pattern;
Fig. 20 is a schematic plan view of the seed furrow showing an offset seeding pattern;
Figs. 21a, 21b and 21c are schematic lateral elevation, plan and front elevation views, respectively, of the device for forming the furrow;
Figs 22a and 22b are schematic lateral elevation and plan views, respectively, of the flattening wheel for forming a flat and homogeneous bed on the furrow, provided with a smooth rolling surface, according to a first variation;
Figs. 23a and 23b are schematic lateral elevation and plan views, respectively, of the flattening wheel provided with a grooved rolling surface, according to a second variation;
Fig. 24 is a schematic lateral elevation view of the furrow showing the seeds deposited on the smooth bed formed by the flattening wheel shown in Figs. 22a and 22b;
Figs. 25a and 25b are schematic lateral elevation and plan views, respectively, of the furrow showing the seeds deposited on the grooved bed formed by the flattening wheel shown in Figs. 23a and 23b;
Figs. 26a and 26b are schematic lateral elevation and plan views, respectively, of the compacting wheel provided to press on the seeds deposited on the bed of the furrow, according to a first variation;
Fig. 27 is a schematic lateral elevation view of the compacting wheel linked to a crawler tractor mechanism, according to a second variation;
Figs. 28a and 28b are schematic lateral elevation and plan views, respectively, of the hilling device and the levelling scraper; and
Fig. 28c is a front elevation view of the flat and homogeneous plateau which determines the definitive furrow wherein the seeds will be buried.

### Detailed description of the drawings

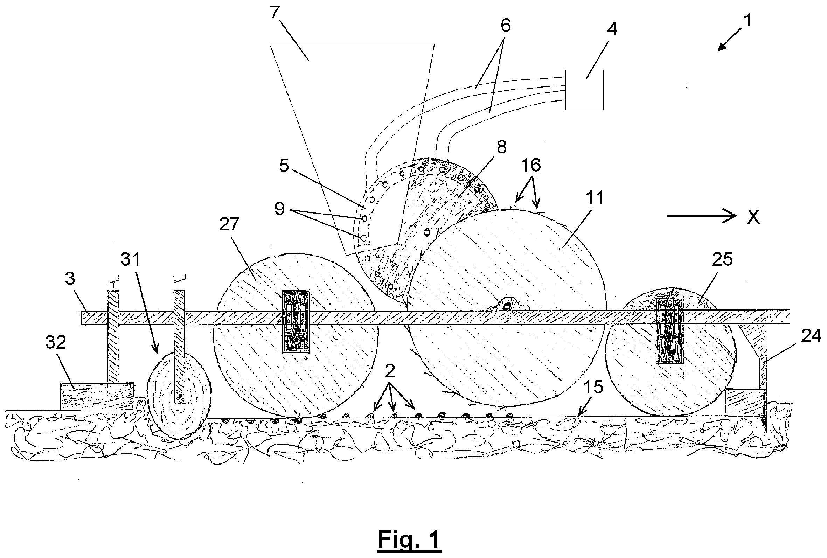

The seeder machine 1 of the invention, shown schematically in figure 1, is especially apt for garlic, onion or similar seeds 2, which have an oblong configuration. As mentioned, a seed 2 with an oblong configuration is understood here as one which possesses a longitudinal dimension "a" larger than the width "b" thereof from the opposite ends from which the germ 2a and the root 2b emerge, respectively, as seen in figures 2a to 2c. Likewise, it is important to note that the garlic or similar seeds 2 have a geometric shape such that when they are deposited on a horizontal surface they adopt a lying position.

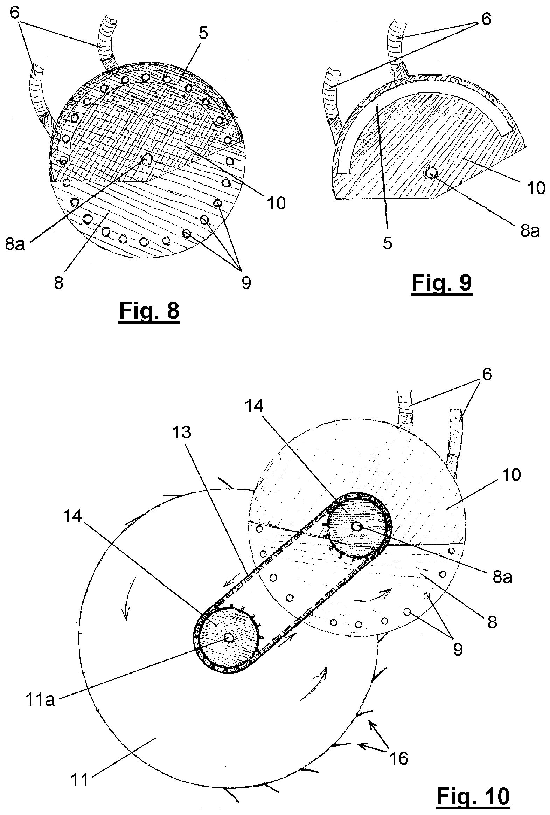

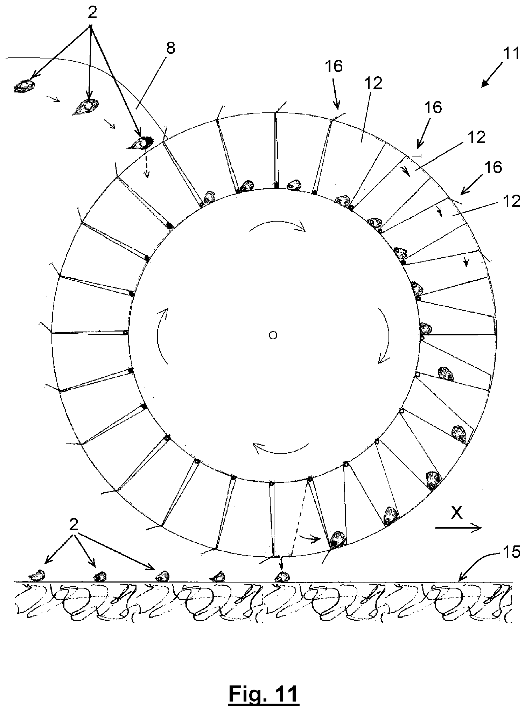

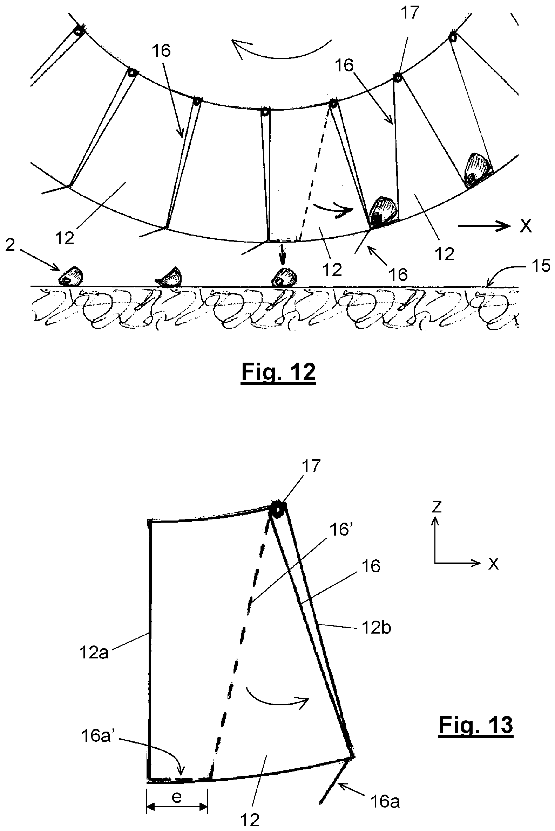

Said seeder machine 1 comprises at least one seeding module, in a variable number depending on the seeding lines, mounted on a chassis 3 towed by a tractor vehicle (not shown), and a turbine 4 actuated by the power take-off of the tractor vehicle. In this exemplary embodiment, as shown in figure 1, a single seeding module has been shown comprising:
- An air intake 5 connected to said turbine 4 through intake ducts 6, as seen in greater detail in figures 8 and 9.
- A hopper 7 for storing seeds equipped on the lower portion thereof with a dispenser outlet arranged in front of the air intake 5. Furthermore, said dispenser outlet vibrates with the aim of preventing possible seed jams, being able to use a vibrating mechanism to do so which is apt to exert a constant vibration on the dispenser outlet, this vibration being fundamental for achieving correct operations of the machine.
- A rotating plate 8 synchronised with the dragging speed of the tractor vehicle, provided with a plurality of holes 9 with a smaller size than that of the seeds 2, distributed regularly on the perimeter thereof (see figure 8), said rotating plate 8 being partially arranged between said air intake 5 and the dispenser outlet of the hopper 7, defining on the rotating plate 8 an intake area, such that each of the holes 9, as they sequentially pass in front of the intake area, is able to retain a seed 2 by suction and transport it in a unitary manner to an area outside the area of reach of said intake area. As seen in the embodiment shown in figures 8 and 9, the intake 5 is arranged as an opening in a support 10, coupled to the chassis of the machine 1, the rotation shaft 8a of the rotating plate 8 being mounted on said support 10.
- A dosing scoop wheel 11, provided on the perimeter thereof with a plurality of fixed buckets 12 made up as compartments, as seen in figures 11 and 12. Said dosing scoop wheel 11 is synchronised in movement with the rotating plate 8 through suitable transmission means, such as for example a transmission with chain 13 and pinions 14 (see figure 10), such that the end of the intake of each hole 9 coincides with the passing of each of the buckets 12 (see figure 11), each bucket 12 being able to receive on the inside thereof one seed 2 and transport it in a unitary manner to a release area, wherein the seed 2 is able to fall due to gravity onto a seed furrow 15 which has been traced in the terrain in the longitudinal advance direction X, as explained below.
- Automatic opening and closing means for each bucket 12 which, in this preferred embodiment shown in figures 11 to 13, comprise a set of collapsible flaps 16, each one linked to a bucket 12. Said collapsible flaps 16 are configured to cause the closing of each bucket 16 after receiving a seed 2 coming from the rotating plate 8, and to cause the opening thereof when the respective bucket 12 adopts an inverted position, wherein the seed 2 is able to fall from a point adjacent to the level of the terrain.

By the effects of the collapsible flaps 16 for the opening and closing means of the buckets 12, a better control of the fall of the seeds 2 onto the furrow 15 is achieved, since the opening of the bucket 12 is produced when it is as close as possible to the terrain, in the inverted position thereof, for example at about two or three centimetres from the surface of the ground, thus enabling the respective seed 2 to be deposited in a controlled manner onto the furrow 15 without it bouncing or moving from the desired position, thus guaranteeing a uniformity of the preestablished distance between seeds 2.

Furthermore, the collapsible flaps 16 are configured to accommodate the seed 2 inside the respective bucket 16 in an operating seeding position (see figure 6), meaning arranging the seed 2 lying in a horizontal position and with the larger longitudinal dimension "a" of the seed 2 oriented in a transverse direction Y perpendicular to a central line "L" of the furrow 15 defined in the longitudinal advance direction X, such that in the opening position of the bucket 12, the seed 2 is able to fall and be deposited onto the furrow 15, maintaining said operating position.

According to the preferred embodiment shown in figures 11 to 13, each collapsible flap 16 is articulated on the inside of the respective bucket 12 thereof by means of a toggle shaft 17 oriented in the transverse direction Y, such that each flap 16 is able to toggle between a front wall 12a and a rear wall 12b of the respective bucket 12, in order to perform the closing and opening thereof, respectively. Furthermore, each flap 16 comprises a support flange 16a arranged on the opposite end of the rotation shaft 17 thereof, said support flange being configured to accommodate the seed 2 in the cited operating position when the bucket 12 is arranged in the inverted position thereof with the flap closed.

Figure 13 shows a bucket 12 showing the collapsible flap 16 in the respective closing and opening positions thereof. In this case, for reasons of clarity the closing position of the flap 16' with the respective support flange 16a' thereof have been represented with dotted lines.

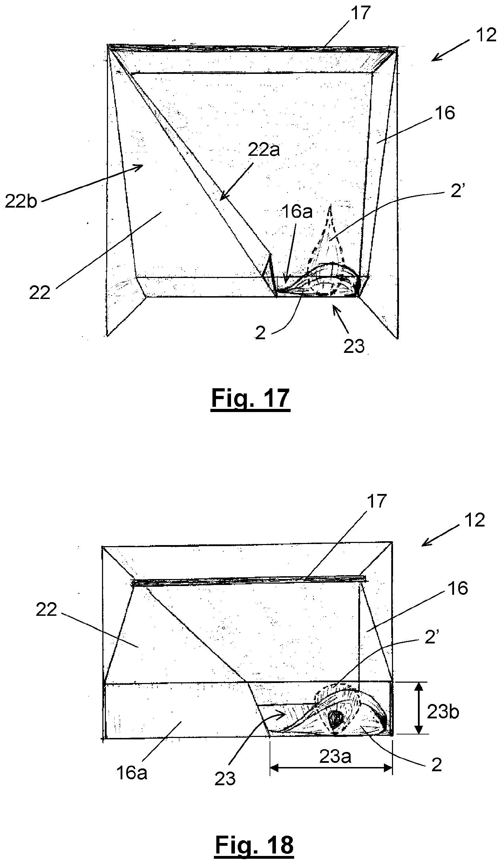

As seen for example in figures 13, 17 and 18, the support flange 16a has a substantially rectangular configuration, the width "e" of which is substantially smaller than the larger longitudinal dimension "a" of the seed 2, in this case substantially the same as the width "b" of the seed 2, such that the seed 2 is obligated to adopt a transverse position inside the bucket 12, meaning being arranged with the larger longitudinal dimension "a" thereof oriented in the transverse direction Y, perpendicularly to the central line "L" of the furrow, and in turn lying in a horizontal position due to the intrinsic configuration thereof. The seed 2' illustrated in dotted lines in figures 17 and 18 shows a fictitious vertical position that is impossible to adopt in the bucket since it will always be placed lying down due to the intrinsic geometry thereof.

Said operating position of the seeds 2 is optimal for the seeding and emergence thereof, as explained below.

Indeed, on one hand, by the effects of the configuration of the collapsible flaps 16, the seed 2 is able to be deposited in the lying position which is the optimal position for the correct emergence thereof in the furrow 15 (see figures 3a to 3c), since the seed 2 once buried, as it germinates, starts to move until it adopts a substantially vertical position, wherein the germ 2a stays arranged upwards, enabling the stem to grow in order to project from the level of the terrain, while the root 2b is directed downwards in order to look for nutrients from the soil.

Thus, a more homogeneous growth of the garlic bulbs is achieved, thus improving the subsequent commercialisation thereof since, unlike what occurred in seeder machines known in the art, it prevents the seeds 2, when falling, from staying embedded in the terrain in a substantially vertical position with the germ 2a of the seed 2 arranged downwards (see figures 4a to 4c), since in this situation the stem during the growth thereof must go all the way around in order to exit to the surface, causing a curve or bend in the stem which stays in the future plant in an anomalous manner, which implies a delay in the emergence process as well as a problem for the subsequent operations of conditioning the garlic bulb for the commercialisation thereof, bringing with it a loss in production.

Moreover, in the state of the art, usually, the seeds 2 are deposited on the furrow forming a row (see figure 5), staying separated at a certain distance "d" from each other, and positioned with the larger longitudinal dimension "a" thereof arranged substantially parallel to the central line "L" of the furrow, in the longitudinal forward direction X. This arrangement has the problem of two contiguous seeds 2 being able to stay arranged with the respective germs 2a thereof facing each other, which makes it necessary to foresee a minimum distance "dmin" between germs 2a in order to guarantee an appropriate space for the correct growth of the future plants, which further obligates foreseeing a separation distance "d" between seeds large enough to prevent this problem of a lack of space, which in turn results in lower production per linear metre.

This problem is solved by the effects of the configuration of the collapsible flaps 16 of the machine 1 of the invention, since they guarantee that the seeds 2 are positioned with the larger longitudinal dimension "a" oriented perpendicularly to the central line "L" of the furrow 15, as seen in figure 6, thus preventing two contiguous seeds 2 from being arranged with the respective germs 2a thereof facing each other. Consequently, this solution enables the distance "d1" necessary between seeds per linear metre to be reduced, thus achieving a higher productivity and homogeneity in the size of the bulbs of garlic, onion, etc.

According to another feature of the invention, the collapsible flaps 16 are linked to actuation means for the opening and closing thereof synchronised with the rotating movement of the dosing scoop wheel 11.

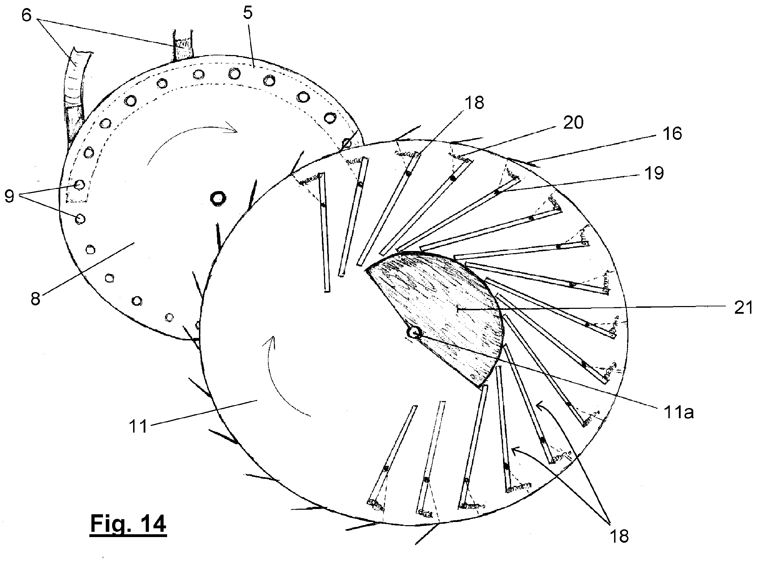

According to the preferred embodiment shown in figure 14, the actuation means of the flaps 16 comprise a set of toggle levers 18 coupled onto one lateral face of the dosing scoop wheel 11, each lever 18 being linked to a flap 16, such that the articulation shaft 19 of each lever 18 is secured in rotation with the toggle shaft 17 of the respective flap 16 thereof. Furthermore, each lever 18 is coupled on one end to elastic means 20, for example a spring, which tend to maintain the flap 16 in the opening position, while the opposite end of the lever 18 is able to come into contact with an actuator element 21 fixed in a secure manner to the chassis 3 of the machine 1.

In this example, said actuator element is configured by a cam 21 equipped with a substantially semicircular guiding surface, arranged concentrically to the rotation shaft 11 a of the dosing scoop wheel 11, such that said cam 21 is fastened to the chassis 3 in an adjustable position, the start of stroke of which corresponds to the successive passing of each lever 18 when the associated bucket 12 has received the seed 2, exerting a pushing force on each lever 18 that is able to overcome the force applied by the respective elastic means 20, thus causing the progressive closing of the respective flap 16, and the end of stroke of which corresponds to the successive passing of each lever 18 when the associated bucket 12 adopts the inverted position thereof, when the cam 21 stops exerting pressure on the respective lever 18, this lever 18 being stretched by the restoring force of the elastic means 20, thus causing the immediate opening of the flap 16 of the bucket 12 arranged in the inverted position in order to unload the seed 2 by gravity into the seed furrow 15.

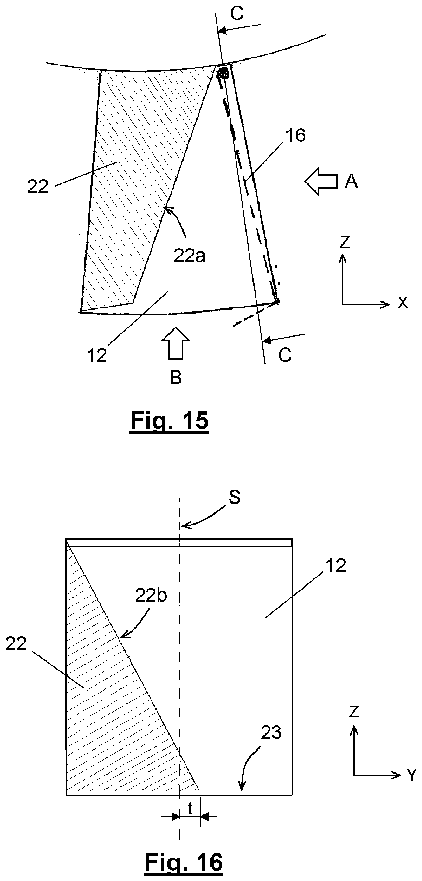

As seen in figures 15 to 18, each bucket 12 comprises diverting means 22 configured to position the seed 2 inside the bucket 12 at a predetermined distance "t" with respect to the vertical plane of symmetry "S" of the bucket 12, said vertical plane of symmetry "S" being substantially aligned with the central line "L" of the seed furrow 15, said diverting means 22 being adjustable in order to establish said distance "t" at will for each of the buckets 12. Thus, different seeding patterns can be created, each seed 2 being able to be arranged on one side or the other of the central line "L" of the furrow, on alternating sides or in one same row, all of this maintaining the cited operating position of the seed 2.

Fig. 16 shows a schematic front elevation view of the bucket 12 seen from a cross section plane C-C shown in Fig. 15. Moreover, Fig. 17 shows the bucket 12 seen from the front according to a direction represented by arrow A of Fig. 15; while Fig. 18 shows the bucket 12 shown from the lower portion thereof according to a direction represented by arrow B of Fig. 15. Both figures 17 and 18 show the seed 2 in the operating position thereof, further showing in dotted lines a fictitious position of the seed 2' in a vertical position which is impossible to adopt since it will always be in a lying position due to the intrinsic geometry thereof.

According to a preferred embodiment, the diverting means 22 of each bucket 12 are made up of a support coupled on the inside of the bucket 22, said support comprising a first partition 22a tilted frontally in the longitudinal advance direction X, intended to act as a stop of the respective toggle flap 16 in the closing position thereof, and a second partition 22b tilted laterally in the transverse direction Y towards one of the lateral walls of the bucket 12, such that the intersection of said second lateral partition 22b and the flap 16 in the closing position thereof define a square space 23 on the support flange 16a of the flap 16.

Said square space 23 is arranged at a predetermined distance "t" with respect to the vertical plane of symmetry "S" of the bucket 12. Furthermore, said square space 23 has a dimension 23a in the transverse direction Y substantially coinciding with the larger longitudinal dimension "a" of the seed 2, and a dimension 23b in the longitudinal direction X substantially coinciding with the width "e" of the support flange 16a of the flap 16, thus enabling the seed 2 to be accommodated in the operating position thereof.

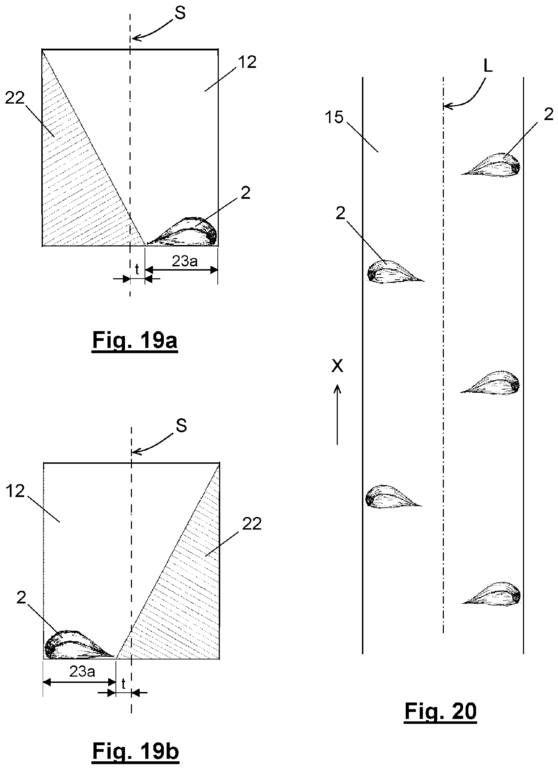

In this example, the diverting means 22 are configured to create an offset seeding pattern, meaning depositing the seeds 2 onto the furrow 15 in two parallel rows, each one on one side of the central line "L" of the furrow 15 (see figure 20), such that each seed 2 of one row stays in front of a gap, between two seeds, of the other row. To do so, the diverting means 22 are positioned in the successive bucket 12 in an alternating manner on one side and the other of the vertical plane of symmetry "S" thereof. Figures 19a and 19b show, respectively, two adjacent buckets, each one showing the respective diverting means 22 thereof arranged on corresponding alternating sides.

Referring to figure 7, it can be seen that this offset arrangement enables the necessary separation distance "d2" between seeds 2 to be diminished, in comparison with the necessary distance "d1" between seeds 2 in the row arrangement (see figure 6), thus enabling the production per linear metre to be increased even more.

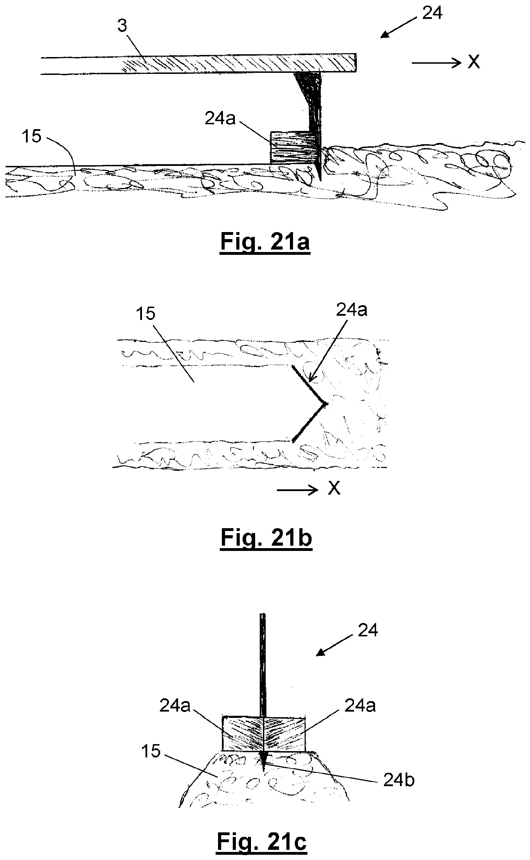

According to another aspect of the invention, each module of the machine 1 is equipped with means for preparing the ground comprising a device 24 for forming a furrow 15 (see figures 21a to 21c), coupled to the chassis 3 in a front area of the dosing scoop wheel 11 (see figure 1), and configured such that it is able to remove the earth, push away possible stones, and in turn form a furrow 15.

According to a preferred embodiment, said device 24 for forming the furrow 15 comprises two substantially vertical blades 24a which converge in a front edge with a predetermined angle of attack and a cutter 24b integrated in the lower portion of said edge.

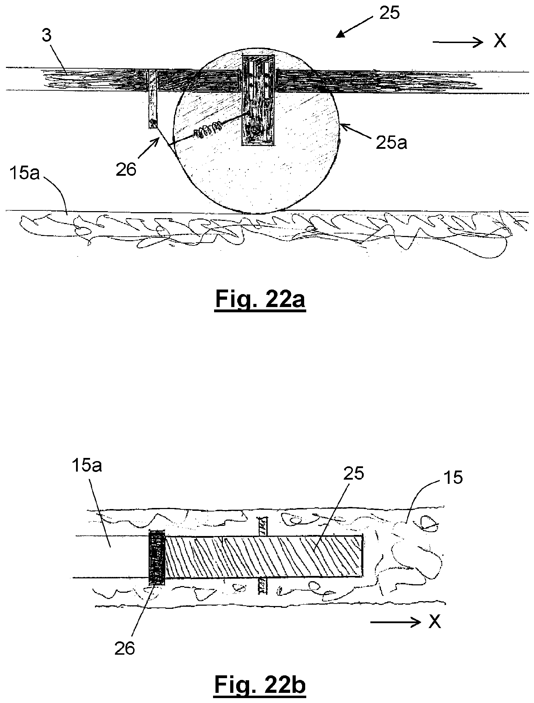

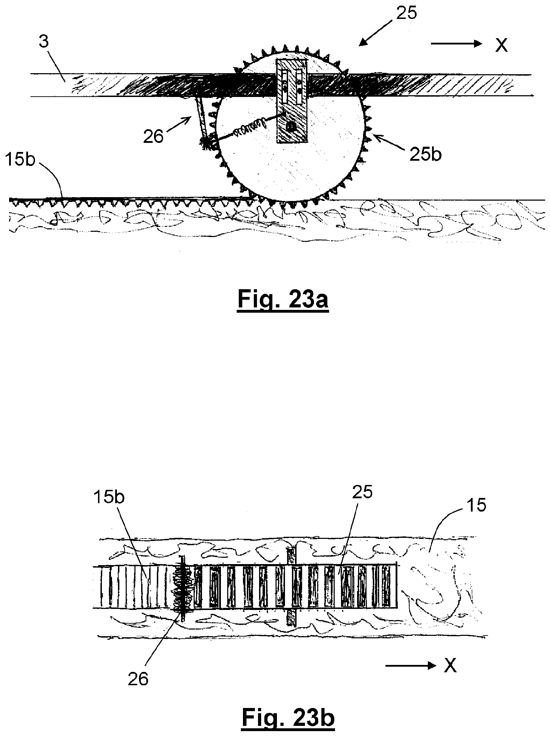

Furthermore, the means for preparing the ground further comprise a flattening wheel 25 (see figure 22a, 22b, 23a and 23b) coupled to the chassis 3 in an area right behind the device 24 for forming the furrow 15 (see figure 1), said flattening wheel 25 being intended to form a flat and homogeneous bed 15a, 15b on the furrow 15 whereon the seeds 2 will be deposited.

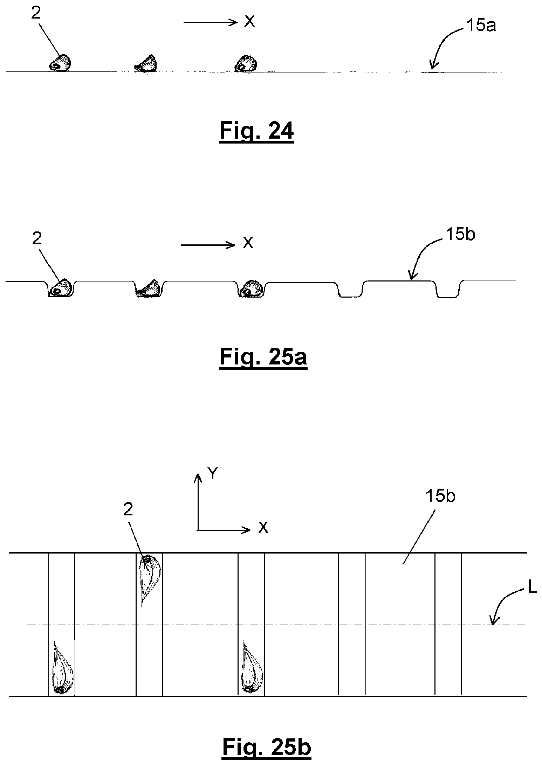

According to a first variation shown in figures 22a and 22b, the flattening wheel 25 has a smooth rolling surface 25a able to form a smooth bed 15a on the furrow 15 whereon the seeds 2 will be deposited (see figure 24).

According to a second variation shown in figures 23a and 23b, the flattening wheel 25 has a grooved rolling surface 25b able to form a grooved bed 15b with a series of transverse slots separated from each other at a predetermined distance, said flattening wheel 25 being synchronised with the dosing scoop wheel 11 in order to cause the fall of each seed 2 in a unitary manner into each slot (see figures 25a and 25b).

In both variations, the flattening wheel 25 comprises means for regulating the height thereof intended to level the bed 15a or 15b of the furrow 15 at a predetermined height. Likewise, the flattening wheel 25 comprises cleaning means 26 able to remove possible ground adhered on the respective rolling surface 25a or 25b thereof.

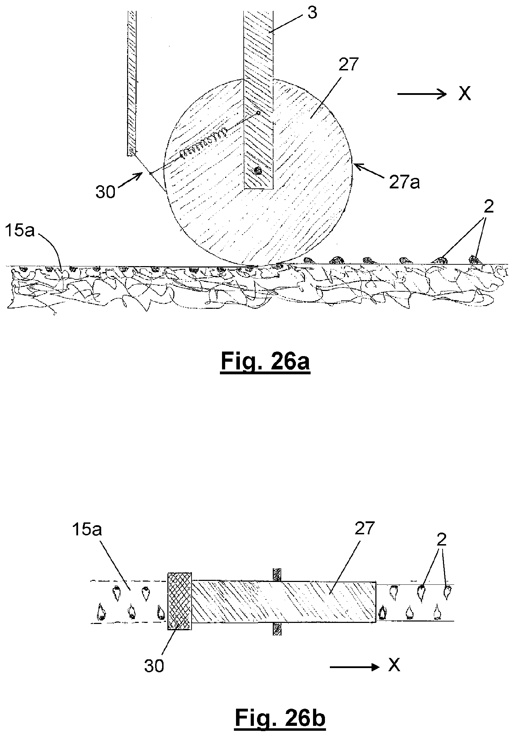

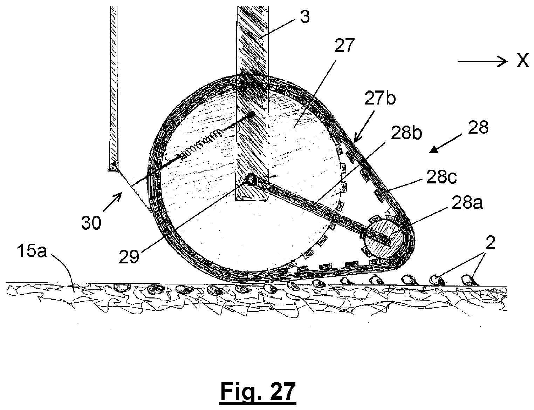

Moreover, each module of the machine 1 is equipped with means for compacting the seeds 2 on the ground (see figures 26a, 26b and 27), which comprise a compacting wheel 27 coupled to the chassis 3 in an area behind the dosing scoop wheel 11 (see figure 1), configured such that it is able to press the seeds 2 deposited on the bed 15a or 15b of the furrow 15 and fasten them at a predetermined depth.

According to a first variation shown in figures 26a and 26b, the compacting wheel 27 comprises a simple rolling surface 27a configured to directly compact the seeds 2 as they pass.

According to a second variation shown in figure 27, the compacting wheel 27 is linked to a crawler tractor mechanism 28 comprising a toggle pinion 28a articulated around the rotation shaft 29 of the compacting wheel 27 through a rod-type support 28b, said pinion 28a being arranged in front of the compacting wheel 27 at a predetermined distance, and the compacting wheel 27 and the pinion 28a further being respectively coupled inside a crawler-type wrapping band 28c equipped with a rolling surface 27b for the advance thereof over the seeds 2, such that the forward arrangement of the pinion 28a enables the wrap-around band 28c to be tensed creating a gripping surface on the terrain able to immobilise the seeds 2 before being compacted by the compacting wheel 27.

In both variations, the compacting wheel 27 is provided with means for regulating the height thereof intended to fasten the seeds 2 at a predetermined depth in the bed 15a or 15b of the furrow. Furthermore, said compacting means comprise cleaning means 30 able to remove possible ground adhered on the respective rolling surface 27a or 27b.

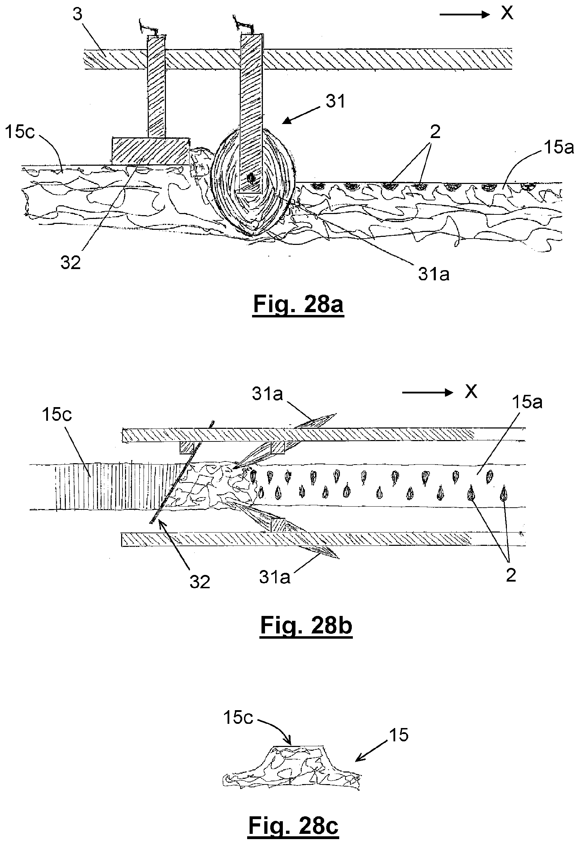

Moreover, each module of the machine 1 is also equipped with means for hilling ground (see figures 28a to 28c) comprising a hilling device 31 coupled to the chassis 3 in an area behind the compacting wheel 27 (see figure 1), intended to cover the seeds 2 fastened in the bed 15a or 15b of the furrow 15 with ground.

According to a preferred embodiment shown in figures 28a and 28b, said hilling device 31 comprises two hilling discs 31a arranged on each side of the bed 15a or 15b of the furrow 15, partially buried and tilted between each other with a predetermined angle of divergence, the arrangement of which enables the adjacent ground to be removed and deposited onto the bed 15a or 15b of the furrow 15 in order to cover the seeds 2.

Furthermore, said hilling device 31 comprises means for regulating the height of the hilling discs 31a in order to adjust the depth thereof with respect to the level of the terrain, and means for regulating the angle of divergence of said discs 31a.

Also referring to figures 28a and 28b, the means for hilling ground further comprise a levelling scraper 32 coupled to the chassis 3 in an area right behind the hilling device 31, intended to form a flat and homogeneous plateau 15c which determines the definitive furrow 15 wherein the seeds 2 will be buried (see figure 28c).

Likewise, the levelling scraper 32 comprises means for regulating the height thereof intended to level the plateau 15c at a predetermined height, and means for regulating the angular position thereof with respect to a vertical rotation shaft.

## Claims

1. A seeder machine (1), which is especially apt for garlic, onion or similar seeds (2), which have an oblong configuration, said seeder machine (1) comprising at least one seeding module mounted on a chassis (3) towed by a tractor vehicle, and a turbine (4) actuated by the power take-off of the tractor vehicle, each seeding module comprising
- an air intake (5) connected to said turbine (4);
- a hopper (7) for storing seeds (2) equipped with a dispenser outlet arranged in front of the air intake (5);
- a rotating plate (8) synchronised with the dragging speed of the tractor vehicle, provided with a plurality of holes (9) distributed regularly on the perimeter thereof, said rotating plate (8) being partially arranged between said air intake (5) and the dispenser outlet of the hopper (7), defining on the rotating plate (8) an intake area, such that each of the holes (9), as they sequentially pass in front of the intake area, is able to retain a seed (2) by suction and transport it in a unitary manner to an area outside the area of reach of said intake area; and
- a dosing scoop wheel (11) provided on the perimeter thereof with a plurality of fixed buckets (12) made up as compartments, the dosing scoop wheel (11) being synchronised in movement with the rotating plate (8) such that the end of the intake of each hole (9) coincides with the passing of each of the buckets (12), each bucket (12) being able to receive on the inside thereof one seed (2) and transport it in a unitary manner to a release area, wherein the seed (2) is able to fall due to gravity onto a seed furrow (15) which has been traced in the terrain in the longitudinal advance direction (X);
**characterised in that** the dosing scoop wheel (11) comprises automatic opening and closing means (16) for each bucket (12), configured to cause the closing of each bucket (12) after receiving a seed (2) coming from the rotating plate (8), and to cause the opening thereof when the respective bucket (12) adopts an inverted position, wherein the seed (2) is able to fall from a point adjacent to the level of the terrain.

2. The seeder machine (1), according to claim 1, **characterised in that** the opening and closing means (16) are configured to accommodate the seed (2) inside the respective bucket (12) in an operating seeding position, meaning arranging the seed (2) lying in a horizontal position and with the larger longitudinal dimension (a) of the seed (2) oriented in a transverse direction (Y) perpendicular to a central line (L) of the furrow (15) defined in the longitudinal advance direction (X), such that in the opening position of the bucket (12), the seed (2) is able to fall and be deposited onto the furrow (15), maintaining said operating position.

3. The seeder machine (1), according to claim 2, **characterised in that** the opening and closing means of the buckets comprise a set of collapsible flaps (16), each one linked to a bucket (12), each flap (16) being articulated on the inside of the respective bucket (12) thereof by means of a toggle shaft (17) oriented in the transverse direction (Y), such that each flap (16) is able to tilt between a front wall (12a) and a rear wall (12b) of the respective bucket (12), in order to perform the closing and opening thereof, respectively, and each flap (16) further comprising a support flange (16a) arranged on the opposite end of the rotation shaft (17) thereof, said support flange (16a) being configured to accommodate the seed (2) in the cited operating position when the bucket (12) is arranged in the inverted position with the flap (16) closed.

4. The seeder machine (1), according to claim 3, **characterised in that** the support flange (16a) has a substantially rectangular configuration the width (e) of which is substantially smaller than the larger longitudinal dimension (a) of the seed (2), such that the seed (2) is obligated to adopt a transverse position inside the bucket (12), meaning being arranged with the larger longitudinal dimension (a) thereof oriented in the transverse direction (Y), perpendicularly to the central line (L) of the furrow (15), and in turn lying in a horizontal position due to the intrinsic configuration thereof.

5. The seeder machine (1), according to claim 3 or 4, **characterised in that** the flaps (16) are linked to actuation means for the opening and closing thereof synchronised with the rotating movement of the dosing scoop wheel (11).

6. The seeder machine (1), according to claim 5, **characterised in that**, the actuation means of the flaps (16) comprise a set of toggle levers (18) coupled onto one lateral face of the dosing scoop wheel (11), each lever (18) being linked to a flap (16), such that the articulation shaft (19) of each lever (18) is secured in rotation with the toggle shaft (17) of the respective flap (16) thereof, each lever (18) being further coupled on one end to the elastic means (20) which tend to maintain the flap (16) in the opening position thereof, while the opposite end of the lever (18) is able to come into contact with an actuator element (21) fixed in a secure manner to the chassis (3) of the machine (1), said actuator element (21) being configured to push each of the levers (18) as they sequentially pass during the rotation of the dosing scoop wheel (11), exerting a pushing force on each lever (18) that is able to overcome the force applied by the respective elastic means (20), thus causing the progressive closing of the respective flaps (16) during a predetermined time comprised from the moment when the respective bucket (12) has received the seed (2) until it reaches the inverted position thereof, moment when the actuator element (21) stops exerting pressure on the respective lever (18), therefore this lever (18), being stretched by the restoring force of the elastic means (20), thereby causing the immediate opening of the flap (16) of the bucket (12) arranged in the inverted position in order to unload the seed (2) by gravity into the seed furrow (15).

7. The seeder machine (1), according to claim 6, **characterised in that** the actuator element is configured by a cam (21) equipped with a substantially semicircular guiding surface, arranged concentrically to the rotation shaft (11a) of the dosing scoop wheel (11), such that said cam (21) is fastened to the chassis (3) in an adjustable position, the start of stroke of which corresponds to the successive passing of each lever (18) when the associated bucket (12) has received the seed (2), causing the progressive closing of the respective flap (16), and the end of stroke of which corresponds to the successive passing of each lever (18) when the associated bucket (12) adopts the inverted position thereof, the cam (21) at that time stop acting in order to cause the immediate opening of the respective flap (16).

8. The seeder machine (1), according to any one of the preceding claims, **characterised in that** each bucket (12) comprises diverting means (22) configured to position the seed (2) inside the bucket (12) at a predetermined distance (t) with respect to the vertical plane of symmetry (S) of the bucket (12), said vertical plane of symmetry (S) being substantially aligned with the central line (L) of the seed furrow (15), said diverting means (22) being adjustable in order to establish said distance (t) at will for each of the buckets (12).

9. The seeder machine (1), according to claim 8, **characterised in that** the diverting means (22) are configured to create an offset seeding pattern, meaning depositing the seeds (2) onto the furrow (15) in two parallel rows, each one on one side of the central line (L) of the furrow (15), such that each seed (2) of one row stays in front of a gap, between two seeds (2), of the other row, the diverting means (22) being positioned to this end in the successive buckets (12) in an alternating manner on one side and the other of the vertical plane of symmetry thereof (S).

10. The seeder machine (1), according to claim 4 in combination with claim 8 or 9, **characterised in that** the diverting means of each bucket (12) are made up of at least one support (22) coupled on the inside of the bucket (12), said support (22) comprising a first partition (22a) tilted frontally in the longitudinal advance direction (X), intended to act as a stop of the respective toggle flap (16) in the closing position thereof, and a second partition (22b) tilted laterally in the transverse direction (Y) towards one of the lateral walls of the bucket (12), such that the intersection of said second lateral partition (22b) and the flap (16) in the closing position thereof define a square space (23) on the support flange (16a) of the flap (16), said square space (23) staying arranged at a predetermined distance (t) with respect to the vertical plane of symmetry (S) of the bucket (12), and such that said square space (23) has a dimension (23a) in the transverse direction (Y) substantially coinciding with the larger longitudinal dimension (a) of the seed (2), and a dimension (23b) in the longitudinal direction (X) substantially coinciding with the width (e) of the support flange (16a) of the flap (16), thereby enabling the seed (2) to be accommodated in the operating position thereof.

11. The seeder machine (1), according to any one of the preceding claims, **characterised in that** each module is equipped with means for preparing the ground comprising a device (24) for forming a furrow (15), coupled to the chassis (3) in a front area of the dosing scoop wheel (11), and configured such that it is able to remove the earth, push away possible stones, and in turn form a furrow (15).

12. The seeder machine (1), according to claim 11, **characterised in that** said device (24) for forming the furrow comprises two substantially vertical blades (24a) which converge in a front edge with a predetermined angle of attack and a cutter (24b) integrated in the lower portion of said edge.

13. The seeder machine (1), according to claim 11 or 12, **characterised in that** the means for preparing the ground further comprise a flattening wheel (25) coupled to the chassis (3) in an area right behind the device (24) for forming the furrow (15), said flattening wheel (25) being intended to form a flat and homogeneous bed (15a, 15b) on the furrow (15) whereon the seeds (2) will be deposited.

14. The seeder machine (1), according to one of the 13 claims, **characterised in that** the flattening wheel (25) has a smooth rolling surface (25a) able to form a smooth bed (15a).

15. The seeder machine (1), according to one of the 13 claims, **characterised in that** the flattening wheel (25) has a grooved rolling surface (25b) able to form a grooved bed (15b) with a series of transverse slots separated from each other at a predetermined distance, said flattening wheel (25) being synchronised with the dosing scoop wheel (11) in order to cause the fall of each seed (2) in a unitary manner into each slot.

16. The seeder machine (1), according to any one of claims 13 to 15, **characterised in that** each module is equipped with means for compacting the seeds (2) on the ground, which comprise a compacting wheel (27) coupled to the chassis (3) in an area behind the dosing scoop wheel (11), configured such that it is able to press the seeds (2) deposited on the bed (15a, 15b) of the furrow (15) and fasten them at a predetermined depth.

17. The seeder machine (1), according to claim 16, **characterised in that** the compacting wheel (27) comprises a simple rolling surface (27a) configured to directly compact the seeds (2) as they pass.

18. The seeder machine (1), according to claim 16, **characterised in that** the compacting wheel (27) is linked to a crawler tractor mechanism (28) comprising a toggle pinion (28a) articulated around the rotation shaft (29) of the compacting wheel (27) through a rod-type support (28b), said pinion (28a) being arranged in front of the compacting wheel (27) at a predetermined distance, and the compacting wheel (27) and the pinion (28a) further being respectively coupled inside a crawler-type wrapping band (28c) equipped with a rolling surface (27b) for the advance thereof over the seeds (2), such that the forward arrangement of the pinion (28a) enables the wrap-around band (28c) to be tensed creating a gripping surface on the terrain able to immobilise the seeds (2) before being compacted by the compacting wheel (27).

19. The seeder machine (1) according to any of claims 16 to 18, **characterised in that** each module is equipped with means for hilling ground comprising a hilling device (31) coupled to the chassis (3) in an area behind the compacting wheel (27), intended to cover the seeds (2) fastened in the bed (15a, 15b) of the furrow (15) with ground.

20. The seeder machine (1), according to claim 19, **characterised in that** said hilling device (31) comprises two hilling discs (31a) arranged on each side of the bed (15a, 15b) of the furrow (15), partially buried and tilted between each other with a predetermined angle of divergence, the arrangement of which enables the adjacent ground to be removed and deposited onto the bed (15a, 15b) of the furrow (15) in order to cover the seeds (2).

21. The seeder machine (1), according to claim 19 or 20, **characterised in that** the means for hilling ground further comprise a levelling scraper (32) coupled to the chassis (3) in an area right behind the hilling device (31), intended to form a flat and homogeneous plateau (15c) which determines the definitive furrow (15) wherein the seeds (2) will be buried.
